# FASCICULE DE BREVET EUROPEEN

(11) **EP 2 869 442 B1**
(45) Date de publication et mention de la délivrance du brevet: **29.03.2017**
(21) Numéro de dépôt: 14189861.9
(22) Date de dépôt: 22.10.2014
(51) Int. Cl.: H02K 21/04, H02K 1/27

(54) **Rotor d'alternateur, boîte pour aimant et alternateur pour véhicule correspondants**
Rotor einer Lichtmaschine, entsprechendes Gehäuse für Magnet und entsprechende Lichtmaschine für Fahrzeug
Alternator rotor, corresponding magnet box and vehicle alternator

(30) Priorité: 24.10.2013 FR 1360369
(43) Date de publication de la demande: 06.05.2015
(73) Titulaire: Valeo Equipements Electriques Moteur, 94046 Créteil Cedex (FR)
(72) Inventeur: Thueur, Olivier, 62780 Stella Plage (FR); Schneider, Olivier, 62170 La Caloterie (FR)
(74) Mandataire: Ribeil, Alexandre

(56) Documents cités:
- EP-A1- 2 509 197
- DE-A1- 10 318 636
- US-A1- 2002 067 101
- US-A1- 2011 127 873

## Description

### DOMAINE TECHNIQUE DE L'INVENTION

La présente invention porte sur un rotor d'alternateur ainsi que sur la boîte pour aimant et l'alternateur pour véhicule correspondants. L'invention trouve une application particulièrement avantageuse avec les alternateurs de véhicules automobiles.

### ARRIERE PLAN TECHNOLOGIQUE

On connaît d'après le document EP-0762617 un alternateur pour véhicule comprenant des roues polaires présentant des pôles en forme de griffes s'imbriquant mutuellement, et des aimants permanents interposés entre les griffes adjacentes. Les aimants permanents permettent de réduire les fuites de flux magnétique et contribuent à renforcer le flux magnétique.

Un autre alternateur pour véhicule est notamment décrit dans la demande de brevet antérieure EP-2509197.

Les aimants interpolaires étant soumis à des contraintes mécaniques importantes dues aux échauffements et aux efforts centrifuges considérables, il est connu de les rigidifier au moyen de plaquettes ou laminettes réalisées généralement dans un matériau composite et plaquées contre au moins une face des aimants. Toutefois, ces laminettes nécessitent la mise en oeuvre d'une étape d'imprégnation ou de collage longue et couteuse à réaliser. Il existe donc le besoin d'un dispositif d'absorption des déformations de l'aimant facilement manipulable pouvant se substituer à la laminette.

Par ailleurs, il est connu de combiner plusieurs aimants entre eux de même nature ou de nature différente (comme par exemple un aimant en ferrite et un aimant en terre rares) afin d'adapter les propriétés magnétiques des aimants à la puissance recherchée de la machine. Toutefois, les techniques existantes basées sur un surmoulage des aimants sont relativement complexes à mettre en oeuvre et imposent de disposer de stocks importants d'aimants surmoulés pour différentes configurations d'intérêt. Il existe donc également le besoin d'une solution permettant de combiner aisément des aimants entre eux tout en facilitant la gestion des stocks.

### OBJET DE L'INVENTION

L'invention vise à combler au moins un de ces besoins en proposant un rotor pour alternateur de véhicule comportant deux roues polaires comprenant des pôles en forme de griffes s'imbriquant mutuellement et au moins un ensemble interpolaire positionné entre deux griffes successives, caractérisé en ce que ledit ensemble interpolaire comporte une boîte contenant au moins un aimant permanent.

L'invention permet ainsi de rigidifier l'aimant en le positionnant à l'intérieur d'une boîte apte à absorber les déformations des pièces dues aux échauffements et aux efforts générés par les vitesses élevées. On économise ainsi les opérations d'imprégnation qui étaient nécessaires pour assurer la fixation des laminettes.

Selon une réalisation, ladite boîte contient une pluralité d'aimants permanents.

La boîte pouvant être fabriquée à cadence élevée, il sera ainsi possible d'effectuer une combinaison d'aimants ayant des propriétés magnétiques différentes en bord de ligne de production via une opération manuelle ou automatique. Cela permet de réaliser les combinaisons des aimants en fonction du besoin en puissance de la machine quasiment en flux tendu, en sorte que l'on peut réduire les stocks par rapport à ceux nécessités par la mise en oeuvre d'une technique de surmoulage.

Selon une réalisation, ladite boîte contient un empilage d'aimants permanents.

Selon une réalisation, l'empilage d'aimants permanents est réalisé suivant une direction radiale.

Selon une réalisation, ladite boîte contient en outre un élément autre qu'un aimant permanent positionné de manière à combler un volume de ladite boîte. Cela permet d'économiser de la matière des aimants de l'ensemble interpolaire en la remplaçant par de la matière moins onéreuse. Cet élément permet également en ajustant ses dimensions ou en utilisant un élément un peu souple de limiter les contraintes dimensionnelles sur les aimants de la boîte. Par exemple, cet élément est un élément intercalaire qui joue le rôle de cale. Dans le cas d'un empilage d'aimants permanents l'élément intercalaire peut se positionner entre deux aimants permanents.

Selon une réalisation, l'élément est amagnétique.

Selon une réalisation, ladite boîte est réalisée en deux parties.

Selon une réalisation, les deux parties de ladite boîte comportent des moyens complémentaires d'assemblage par encliquetage. On facilite ainsi l'assemblage et le démontage de la boîte afin de récupérer les aimants et de les recycler dans d'autres applications.

Selon une réalisation, afin de limiter les fuites magnétiques interpolaires, ladite boîte présente des faces tournées vers lesdites griffes au moins partiellement ouvertes.

Selon une réalisation, ladite boîte est insérée dans des rainures ménagées dans des faces latérales en regard l'une de l'autre de deux griffes adjacentes du dit rotor.

Selon l'invention, ladite boîte comporte un dispositif permettant de maintenir le au moins un aimant permanent ou un empilage de pièces dans une position déterminée à l'intérieur de ladite boîte. Une telle configuration permet d'assurer un maintien efficace de l'aimant ou des pièces à l'intérieur de la boîte.

Selon une réalisation, ladite boîte est réalisée dans un matériau plastique ou composite.

Selon une réalisation, afin d'assurer une bonne continuité du champ magnétique à travers la boîte, ladite boîte est réalisée dans un matériau plastique ou composite magnétique.

Selon une réalisation, ladite boîte présente une couleur correspondant à des propriétés magnétiques du au moins un aimant permanent.

L'invention a également pour objet un alternateur de véhicule comportant un rotor selon l'invention.

L'invention concerne en outre une boîte adaptée à contenir au moins un aimant permanent et configurée pour pouvoir s'insérer entre deux griffes successives d'un alternateur de véhicule automobile.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue partielle en perspective d'un rotor d'alternateur selon la présente invention;
Les figures 2a et 2b représentent des vues en perspectives éclatées d'un ensemble interpolaire utilisé avec le rotor selon l'invention comportant respectivement un aimant unique et un empilage de deux aimants;
La figure 3 représente une variante de réalisation d'un ensemble interpolaire comportant un élément intercalaire amagnétique.

Les éléments identiques, similaires, ou analogues conservent la même référence d'une figure à l'autre.

### DESCRIPTION D'EXEMPLES DE REALISATION DE L'INVENTION

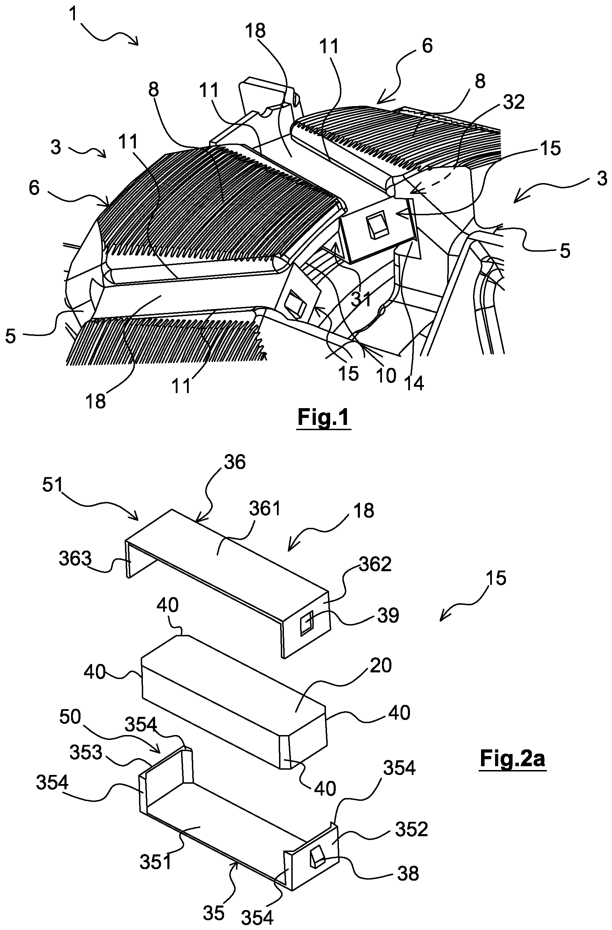

L'alternateur selon la présente invention comporte un stator et un rotor 1 muni d'un arbre. Le rotor 1 visible de manière partielle sur la figure 1 comporte deux roues polaires 3 comprenant chacune un plateau 5 en forme de disque monté coaxialement sur l'arbre. Les deux plateaux 5 s'étendent en coïncidence et parallèlement l'un à l'autre.

Chaque roue polaire 3 comporte des pôles 6 en forme de griffe, généralement plats et triangulaires, s'étendant à partir d'un plateau 5 en direction de l'autre plateau 5. Les pôles 6 des roues polaires 3 s'imbriquent mutuellement de sorte que la pointe de chaque pôle 6 s'étend très près du plateau 5 de l'autre roue polaire 3. On pourra se référer par exemple au document EP0762617 pour plus de détails sur la structure générale de l'alternateur.

Les deux roues polaires 3 sont associées aux pôles 6 respectifs Nord et Sud. Chaque pôle 6 présente deux faces circonférentielles respectivement externe convexe 8 et interne concave 10, et deux faces latérales planes 11 formant deux des côtés du triangle et contiguës aux faces circonférentielles 8, 10. Les faces latérales 11 des pôles 6 s'étendent en regard et à distance les unes des autres.

Dans le présent mode de réalisation, chaque face latérale 11 présente une rainure 14 ayant un axe s'étendant suivant une direction longitudinale de la face latérale 11. Le rotor 1 comporte des ensembles interpolaires 15 ayant ici une forme générale en parallélépipède rectangle. Chaque ensemble interpolaire 15 est reçu entre les faces latérales 11 de deux pôles 6 respectifs dans les rainures 14.

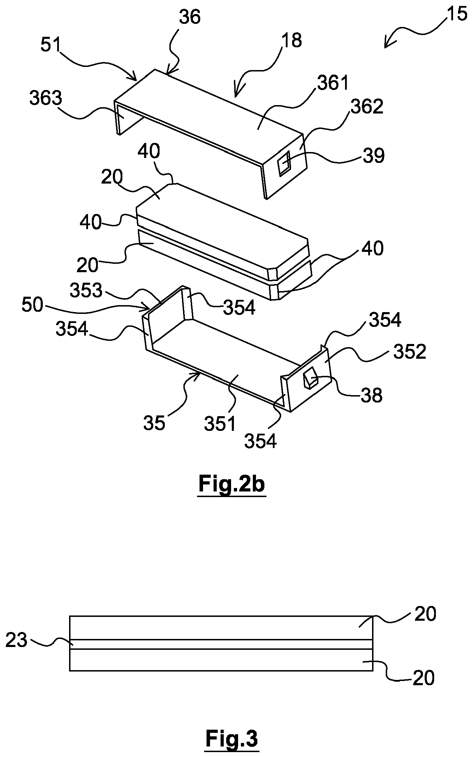

Chaque ensemble interpolaire 15 comporte une boîte 18 contenant au moins un aimant 20. Ainsi, dans l'exemple de la figure 2a, la boîte 18 contient un aimant permanent unique 20. Dans l'exemple de la figure 2b, la boîte 18 contient un empilage d'aimants permanents 20 en l'occurrence au nombre de deux. L'empilage des aimants permanents 20 est réalisé suivant une direction radiale par rapport à l'axe du rotor 1.

Dans une variante de réalisation montrée sur la figure 3, la boîte 18 contient également un élément intercalaire 23 amagnétique positionné entre deux aimants 20 empilés. Cela permet d'économiser de la matière des aimants 20 dans leur partie centrale en la remplaçant par de la matière moins onéreuse. L'épaisseur de l'élément intercalaire 23 pourra être variable d'une application à une autre. En variante, l'élément intercalaire 23 pourra être réalisé en métal. On peut également positionner un élément 23 dans une boîte contenant un seul aimant 20. Dans tous les cas, l'élément 23 est positionné de manière à combler un volume de la boîte 18.

Pour un encombrement en épaisseur de l'ensemble interpolaire 15 de l'ordre 10mm, ce qui représente, si l'on considère que les parois de la boîte 18 ont une épaisseur de l'ordre de 0.5mm, une épaisseur de l'ordre de 9mm disponible à l'intérieur de la boîte 18, on pourra par exemple combiner un aimant 20 en terres rare NeFeB (Neodyme-Fer-Bore) d'épaisseur 3mm et un aimant 20 en ferrite de niveau 1 d'épaisseur 6mm. Alternativement, on pourra choisir de combiner un aimant 20 en ferrite de niveau 2 d'épaisseur 4mm et un aimant 20 en SmCo (Samarium-Cobalt) d'épaisseur 5mm. Dans une autre configuration, on choisit de combiner un aimant 20 en SmCo (Samarium-Cobalt) d'épaisseur 2mm, un élément intercalaire 23 réalisé par exemple dans un matériau plastique de 4mm et un aimant 20 en terres rares de 3mm.

Les différentes combinaisons d'aimants 20 précitées, qui ne sont bien entendu pas exhaustives, permettent d'ajuster aisément les propriétés magnétiques de l'ensemble interpolaire 15 à la puissance recherchée de l'alternateur. De préférence, la boîte 18 présente une couleur correspondant aux propriétés magnétiques des aimants 20 qu'elle contient. Cela permet d'assurer un détrompage en ligne d'assemblage. Il sera ainsi possible d'effectuer une vérification de l'exactitude du type d'aimants 20 utilisés via l'utilisation d'un capteur ou d'une caméra couleur.

Par ailleurs, la boîte 18 permet de solidariser ensemble plusieurs aimants 20 de petit volume pour former un seul élément magnétique d'un volume correspondant à l'espace inter-griffe. Cela est avantageux du point de vue du coût car la somme des coûts d'aimants 20 de petits volume est moins élevée que le coût d'un seul aimant de volume correspondant.

La boîte 18 présente également des faces 31, 32 tournées vers les griffes 6 qui sont ouvertes au moins partiellement afin de limiter les pertes magnétiques de flux entre les pôles 6.

En l'occurrence, comme cela est bien visible sur les figures 2a et 2b, la boîte 18 est formée par l'assemblage d'une première 35 et d'une deuxième 36 parties présentant chacune globale une forme de U en vue de côté. Ces parties 35, 36 sont munies de moyens complémentaires d'assemblage par encliquetage 38, 39, 50, et 51.

Plus précisément, la première partie 35 formant le fond comporte une paroi 351, dite paroi de base, de forme rectangulaire et deux parois latérales 352, 353 qui s'étendent suivant les côtés transversaux de la paroi de base 351. Les deux parois latérales 352 et 353 comportent chacune un ergot 38, 50, ici en forme de rampe, destinés à coopérer chacun avec une ouverture 39, 51 ménagée dans la deuxième partie 36. Le fond 35 comporte un dispositif permettant d'assurer un maintien efficace dans une position déterminée des aimants 20 ou d'un empilage de pièces 20, 23 à l'intérieur de la boîte 18. Un de ces dispositifs peut être, par exemple des portions 354 délimitant des angles chanfreinés destinés à être positionnés en regard d'angles chanfreinés 40 de formes complémentaires ménagées du côté des extrémités axiales des aimants et éventuels éléments intercalaire 23 contenus dans la boîte 18.

Par ailleurs, la deuxième partie 36 formant le couvercle comporte une paroi 361, dite paroi de base, de forme rectangulaire et deux parois latérales 362, 363 qui s'étendent suivant les côtés transversaux de la paroi de base 361. Les parois latérales 362 et 363 comportent chacune une ouverture 39 et 51 destinées à recevoir respectivement les ergots 38 et 50.

Lors d'un assemblage d'un ensemble interpolaire 15 qui pourra être réalisé en bord de ligne d'assemblage, l'opérateur positionne à l'intérieur de l'espace délimité par le fond 35 plusieurs aimants 20 empilés et le cas échéant une pièce amagnétique 23. Le couvercle 36 est ensuite positionné au-dessus du fond 35, en sorte que les l'ergot 38 et 50 s'insèrent à l'intérieur des ouvertures 39 et 51 correspondantes pour assurer une fermeture de la boîte 18. La boîte 18 et son contenu magnétique pourront ensuite être positionnés dans des rainures 14 ménagées dans les faces latérales 11 de deux griffes adjacentes 6.

Le démontage ultérieur de la boîte 18 pourra être réalisé en écartant par déformation élastique les parois latérales 362 et 363 de manière à dégager les ergots 38 et 50 par rapport aux ouvertures 39 et 51 pour pouvoir retirer le couvercle 36. Un tel démontage permet de récupérer aisément les aimants 20 lors d'un recyclage d'alternateur, les aimants 20 ayant été protégés dans la boîte 18, ils sont en bon état et peuvent être utilisés pour la fabrication d'un nouvel alternateur ou pour d'autres applications.

La boîte 18 pourra être réalisée dans un matériau magnétique. Cela permet d'assurer une bonne continuité du champ magnétique à travers la boîte 18. La boite 18 pourra être réalisée dans un matériau plastique ou composite qui pourra être magnétique ou amagnétique.

Bien entendu, le rotor 1 et la boîte 18 selon l'invention ne sont pas limités à l'exemple de réalisation précédemment décrit. En particulier, les parties 35, 36 de la boîte 18 pourraient être assemblées d'une autre manière, comme par exemple par collage. La boîte 18 pourrait également en variante comporter une partie unique formant une coque présentant une ouverture destinée à recevoir un ou plusieurs aimants et éventuellement un élément 23 maintenus par encliquetage à l'intérieur de la boîte 18.

## Revendications

1. Rotor (1) pour alternateur de véhicule comportant deux roues polaires (3) comprenant des pôles (6) en forme de griffes s'imbriquant mutuellement et au moins un ensemble interpolaire (15) positionné entre deux griffes (6) successives, **caractérisé en ce que** ledit ensemble interpolaire (15) comporte une boîte (18) contenant au moins un aimant permanent (20), la boîte (18) comportant un dispositif permettant de maintenir le au moins un aimant permanent (20) dans une position déterminée à l'intérieur de ladite boîte (18).

2. Rotor selon la revendication 1, **caractérisé en ce que** ladite boîte (18) contient une pluralité d'aimants permanents (20).

3. Rotor selon la revendication 1 ou 2, **caractérisé en ce que** ladite boîte contient un empilage d'aimants permanents (20).

4. Rotor selon la revendication 3, **caractérisé en ce que** l'empilage d'aimants permanents (20) est réalisé suivant une direction radiale.

5. Rotor selon l'une quelconque des revendications 2 à 4, **caractérisé en ce que** ladite boîte contient en outre un élément (23) autre qu'un aimant permanent positionné de manière à combler un volume de ladite boîte (18).

6. Rotor selon la revendication 5, **caractérisé en ce que** l'élément (23) est amagnétique.

7. Rotor selon l'une quelconque des revendications 1 à 6, **caractérisé en ce que** ladite boîte (18) est réalisée en deux parties (35, 36).

8. Rotor selon la revendication 7, **caractérisé en ce que** les deux parties (35, 36) de ladite boîte (18) comportent des moyens complémentaires d'assemblage par encliquetage (38, 39, 50, 51).

9. Rotor selon l'une quelconque des revendications 1 à 8, **caractérisé en ce que** ladite boîte (18) est insérée dans des rainures (14) ménagées dans des faces latérales (11) en regard l'une de l'autre de deux griffes (6) adjacentes dudit rotor (1).

10. Rotor selon l'une quelconque des revendications 1 à 9, **caractérisé en ce que** ladite boîte (18) est réalisée dans un matériau plastique ou composite.

11. Rotor selon l'une quelconque des revendications 1 à 9, **caractérisé en ce que** ladite boîte (18) est réalisée dans un matériau plastique ou composite magnétique.

12. Rotor selon l'une quelconque des revendications 1 à 11, la boîte présentant des faces (31, 32) tournées vers les griffes (6) au moins partiellement ouvertes.

13. Rotor selon l'une quelconque des revendications 1 à 12, ledit dispositif comportant des portions (354) délimitant des angles chanfreinés destinés à être positionnés en regard d'angles chanfreinés (40) de formes complémentaires ménagées du côté des extrémités axiales des aimants (20) contenus dans la boîte (18).

14. Alternateur de véhicule comportant un rotor (1) selon l'une quelconque des revendications 1 à 13.

## Patentansprüche

1. Rotor (1) für eine Lichtmaschine eines Fahrzeugs, umfassend zwei Polräder (3), welche Pole (6) in Form von sich ineinander verschachtelnden Krallen aufweisen, und mindestens eine Zwischenpolbaugruppe (15), welche zwischen zwei aufeinander folgenden Krallen (6) angeordnet ist, **dadurch gekennzeichnet, dass** die Zwischenpolbaugruppe (15) ein Gehäuse (18) umfasst, welches mindestens einen Permanentmagnet (20) enthält, wobei das Gehäuse (18) eine Vorrichtung umfasst, welche es ermöglicht, den mindestens einen Permanentmagneten (20) in einer vorgegebenen Position im Inneren des Gehäuses (18) zu halten.

2. Rotor nach Anspruch 1, **dadurch gekennzeichnet, dass** das Gehäuse (18) eine Vielzahl an Permanentmagneten (20) enthält.

3. Rotor nach Anspruch 1 oder 2, **dadurch gekennzeichnet, dass** das Gehäuse eine Stapelung von Permanentmagneten (20) enthält.

4. Rotor nach Anspruch 3, **dadurch gekennzeichnet, dass** die Stapelung von Permanentmagneten (20) gemäß einer radialen Richtung ausgeführt ist.

5. Rotor nach einem der Ansprüche 2 bis 4, **dadurch gekennzeichnet, dass** das Gehäuse außerdem ein anderes Element (23) als einen Permanentmagneten enthält, welches derartig angeordnet ist, dass ein Volumen des Gehäuses (18) aufgefüllt wird.

6. Rotor nach Anspruch 5, **dadurch gekennzeichnet, dass** das Element (23) nicht-magnetisch ist.

7. Rotor nach einem der Ansprüche 1 bis 6, **dadurch gekennzeichnet, dass** das Gehäuse (18) aus zwei Teilen (35, 36) ausgeführt ist.

8. Rotor nach Anspruch 7, **dadurch gekennzeichnet, dass** die beiden Teile (35, 36) des Gehäuses (18) komplementäre Verbindungsmittel zum Verrasten (38, 39, 50, 51) aufweisen.

9. Rotor nach einem der Ansprüche 1 bis 8, **dadurch gekennzeichnet, dass** das Gehäuse (18) in Nuten (14) eingesetzt ist, welche in den einander gegenüber liegenden Seitenflächen (11) zweier benachbarter Krallen (6) des Rotor (1) eingebracht sind.

10. Rotor nach einem der Ansprüche 1 bis 9, **dadurch gekennzeichnet, dass** das Gehäuse (18) aus einem Kunststoff- oder Verbundmaterial ausgeführt ist.

11. Rotor nach einem der Ansprüche 1 bis 9, **dadurch gekennzeichnet, dass** das Gehäuse (18) aus einem magnetischen Kunststoff- oder Verbundmaterial ausgeführt ist.

12. Rotor nach einem der Ansprüche 1 bis 11, **dadurch gekennzeichnet, dass** das Gehäuse zu den Krallen (6) hin gewandte Flächen (31, 32) aufweist, welche zumindest teilweise offen sind.

13. Rotor nach einem der Ansprüche 1 bis 12, **dadurch gekennzeichnet, dass** die Vorrichtung Abschnitte (354) umfasst, welche abgeschrägte Ecken abgrenzt, welche dafür vorgesehen sind, gegenüber von abgeschrägten Ecken (40) von komplementären Formen angeordnet zu werden, welche seitlich an den axialen Enden der in dem Gehäuse (18) enthaltenen Magnete (20) ausgeführt sind.

14. Lichtmaschine für ein Kraftfahrzeug, umfassend einen Rotor (1) nach einem der Ansprüche 1 bis 13.

## Claims

1. Rotor (1) for a vehicle alternator comprising two pole wheels (3) comprising poles (6) in the form of mutually interleaving claws and at least one interpole assembly (15) positioned between two successive claws (6), **characterized in that** said interpole assembly (15) comprises a box (18) containing at least one permanent magnet (20), the box (18) comprising a device making it possible to hold the at least one permanent magnet (20) in a determined position inside said box (18).

2. Rotor according to Claim 1, **characterized in that** said box (18) contains a plurality of permanent magnets (20).

3. Rotor according to Claim 1 or 2, **characterized in that** said box contains a stacking of permanent magnets (20).

4. Rotor according to Claim 3, **characterized in that** the stacking of permanent magnets (20) is produced in a radial direction.

5. Rotor according to any one of Claims 2 to 4, **characterized in that** said box further contains an element (23) other than a permanent magnet positioned so as to fill a volume of said box (18).

6. Rotor according to Claim 5, **characterized in that** the element (23) is amagnetic.

7. Rotor according to any one of Claims 1 to 6, **characterized in that** said box (18) is produced in two parts (35, 36).

8. Rotor according to Claim 7, **characterized in that** the two parts (35, 36) of said box (18) comprise complementary snap-fitting assembly means (38, 39, 50, 51).

9. Rotor according to any one of Claims 1 to 8, **characterized in that** said box (18) is inserted into grooves (14) formed in lateral faces (11) facing one another of two adjacent claws (6) of said rotor (1).

10. Rotor according to any one of Claims 1 to 9, **characterized in that** said box (18) is produced in a plastic or composite material.

11. Rotor according to any one of Claims 1 to 9, **characterized in that** said box (18) is produced in a plastic or composite magnetic material.

12. Rotor according to any one of Claims 1 to 11, the box having faces (31, 32) turned towards the claws (6) that are at least partially open.

13. Rotor according to any one of Claims 1 to 12, said device comprising portions (354) delimiting chamfered angles intended to be positioned facing chamfered angles (40) of complementary forms formed on the side of the axial ends of the magnets (20) contained in the box (18).

14. Vehicle alternator comprising a rotor (1) according to any one of Claims 1 to 13.
